# EUROPEAN PATENT APPLICATION

(11) **EP 4 621 861 A1**
(43) Date of publication of application: **24.09.2025**
(21) Application number: 24783962.4
(22) Date of filing: 25.01.2024
(51) Int. Cl.: H01M 4/13, H01M 10/0525

(54) **ELECTRODE ASSEMBLY, BATTERY CELL, BATTERY, AND ELECTRIC DEVICE**

(30) Priority: 03.04.2023 CN 202310346996
(71) Applicant: Contemporary Amperex Technology Co., Limited, Ningde, Fujian 352100 (CN)
(72) Inventor: HUANG, Xian, Ningde, Fujian 352100 (CN); LIU, Chengyong, Ningde, Fujian 352100 (CN); CHEN, Yuhang, Ningde, Fujian 352100 (CN); MA, Yunjian, Ningde, Fujian 352100 (CN); CAI, Xiaolan, Ningde, Fujian 352100 (CN)
(74) Representative: Kraus & Lederer PartGmbB
(86) International application number: PCT/CN2024/073981
(87) International publication number: WO 2024/207877

(57) **Abstract**

This application relates to an electrode assembly, a battery cell, a battery, and an electric apparatus. The electrode assembly includes a first electrode plate and a second electrode plate. The first electrode plate includes a first current collector and a first active substance layer. The second electrode plate has a polarity opposite to that of the first electrode plate. The second electrode plate includes a second current collector and a second active substance layer. Along a thickness direction of the electrode assembly, a projection of the second active substance layer is located within a projection of the first active substance layer. The second active substance layer includes an edge region and a center region. The edge region and the center region are both disposed on a surface of the second current collector. The edge region and the center region are continuously disposed, and the edge region is located on at least one side of the center region. Along a direction from the edge region toward the center region, a thickness of the edge region increases stepwise, and an average thickness of the edge region is less than an average thickness of the center region.

## Description

### CROSS-REFERENCE TO RELATED APPLICATIONS

This application claims priority to Chinese Patent Application No. 202310346996.0, filed on April 3, 2023, and entitled "ELECTRODE ASSEMBLY, BATTERY CELL, BATTERY, AND ELECTRIC APPARATUS", which is incorporated herein by reference in its entirety.

### TECHNICAL FIELD

This application relates to the field of battery technologies, and more specifically, to an electrode assembly, a battery cell, a battery, and an electric apparatus.

### BACKGROUND

Battery cells have advantages such as reliable operational performance, no pollution, and no memory effect, and thus are widely used. For example, with increasing attention to environmental protection problems, new energy vehicles are becoming increasingly prevalent, and the demand for traction battery cells will experience explosive growth.

As performance requirements for battery cells increase, usage reliability of the battery cells becomes particularly important. Therefore, how to further enhance the usage reliability of the battery cells is an urgent problem to be addressed today.

### SUMMARY

This application provides an electrode assembly, a battery cell, a battery, and an electric apparatus. This application can improve usage reliability of the battery cell.

According to a first aspect, an embodiment of this application provides an electrode assembly. The electrode assembly includes a first electrode plate and a second electrode plate. The first electrode plate includes a first current collector and a first active substance layer. The first active substance layer is disposed on at least one surface of the first current collector. The second electrode plate has a polarity opposite to that of the first electrode plate. The second electrode plate includes a second current collector and a second active substance layer. The second active substance layer is disposed on at least one surface of the second current collector. Along a thickness direction of the electrode assembly, a projection of the second active substance layer is located within a projection of the first active substance layer. The second active substance layer includes an edge region and a center region. The edge region and the center region are both disposed on the surface of the second current collector. The edge region and the center region are continuously disposed, and the edge region is located on at least one side of the center region. Along a direction from the edge region toward the center region, a thickness of the edge region increases stepwise, and an average thickness of the edge region is less than an average thickness of the center region.

Therefore, in the embodiment of this application, along the direction from the edge region toward the center region, a thickness of the edge region exhibits a changing trend, characterized by a stepwise increase. When the electrode assembly is applied to a battery cell, a thickness difference in the edge region enables deformation under a force, a contact area between the second active substance layer and the entire first electrode plate increases, pressure can be reduced, and stress concentration can be alleviated, thereby effectively mitigating a risk caused by a first electrode plate cracking and breaking, and improving the usage reliability of the battery cell.

In some embodiments, the first current collector includes a first current collecting portion and a first tab portion that are continuously disposed along a first direction. The first active substance layer is disposed on at least one surface of the first current collecting portion, and the first direction is perpendicular to the thickness direction of the electrode assembly. The second current collector includes a second current collecting portion and a second tab portion that are continuously disposed along the first direction. The second active substance layer is disposed on at least one surface of the second current collecting portion. The first current collecting portion and the second current collecting portion are disposed opposite each other. The edge region is disposed at least on a side of the center region close to the first tab portion.

Therefore, in the embodiment of this application, an area on which a connection portion between the first current collecting portion and the first tab portion comes into contact with the edge region increases. Consequently, pressure can be further reduced, and stress concentration can be alleviated, thereby effectively mitigating a risk of the first electrode plate breaking, and improving the usage reliability of the battery cell.

In some embodiments, the edge region is disposed on two sides of the center region opposite each other along the first direction. In this structural form, a risk of breaking at a connection portion between the first tab portion and the first current collecting portion can be alleviated, and a risk of breaking at an end of the first current collecting portion facing away from the first tab portion can also be alleviated, thereby further improving the usage reliability of the battery cell.

In some embodiments, the edge region is further disposed on at least one side of the center region along a second direction, and the second direction is perpendicular to the thickness direction of the electrode assembly. In this structural form, the usage reliability of the battery cell can be further improved.

In some embodiments, the edge region is disposed on two sides of the center region opposite each other along the second direction. In this structural form, the usage reliability of the battery cell can be further improved.

In some embodiments, the edge region and the center region are smoothly and transitionally connected. When a force is applied to the first electrode plate at a connection portion between the edge region and the center region, stress on the first electrode plate is relatively uniform, effectively alleviating a stress concentration problem, thereby improving the usage reliability of the battery cell.

In some embodiments, a cross-sectional area of the edge region parallel to the thickness direction of the electrode assembly includes a first edge and a second edge. The first edge and the second edge are opposite each other along the thickness direction of the electrode assembly. The first edge is located on a side of the second edge facing away from the second current collector, and the first edge is a smooth line segment.

Therefore, in the embodiment of this application, the first edge is a smooth line segment, and an overall thickness increase trend of the edge region is moderated. When the edge region comes into contact with the first electrode plate, a relatively gentle force can be applied to the first electrode plate to reduce a stress concentration phenomenon on the first electrode plate, thereby improving the usage reliability of the battery cell.

In some embodiments, at least a portion of the smooth line segment is a curved line segment. This structure, when coming into contact with the first electrode plate, can deform and apply a relatively gentle force to the first electrode plate to reduce a stress concentration phenomenon on the first electrode plate, thereby improving the usage reliability of the battery cell.

In some embodiments, the smooth line segment is a curved line segment, and a thickness increase trend thereof is moderated. When the edge region comes into contact with the first electrode plate, a relatively gentle force can be applied to the first electrode plate to reduce a stress concentration phenomenon on the first electrode plate, thereby improving the usage reliability of the battery cell.

In some embodiments, an average slope of the first edge is K, and K ≤ 1/20. When the average slope K of the first edge is within the above range, a thickness variation is relatively moderate to help alleviating a stress concentration phenomenon on the first electrode plate, thereby improving the usage reliability of the battery cell.

In some embodiments, along the direction from the edge region toward the center region, a slope K of the first edge decreases stepwise. The thickness increase trend of the edge region is faster when being farther from the center region. The thickness increase trend of the edge region is more moderate when being closer to the center region. Therefore, it facilitates deformation of the edge region under a force to increase a contact area with the first electrode plate, and facilitates formation of a smooth and transitional connection between the edge region and the center region.

In some embodiments, along the direction from the edge region toward the center region, a dimension of the edge region is A measured in mm, and a thickness of the second electrode plate is B measured in mm, where 20 ≤ A/B ≤ 200.

In some embodiments, the first electrode plate is a negative electrode plate and the first active substance layer includes an alkali metal. Because the alkali metal is relatively soft and prone to damage and breaking, when the first electrode plate is used in cooperation with the second electrode plate, a risk of damaging lithium metal can be reduced, thereby improving the usage reliability of the battery cell.

According to a second aspect, an embodiment of this application provides a battery cell. The battery cell includes the electrode assembly according to any embodiment of the first aspect of this application.

According to a third aspect, an embodiment of this application provides a battery, the battery including the battery cell according to the second aspect of this application.

According to a fourth aspect, an embodiment of this application provides an electric apparatus, including the battery according to any embodiment of the third aspect of this application.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and persons of ordinary skill in the art may still derive other drawings from the accompanying drawings without creative efforts.
FIG. 1 is a schematic structural diagram of a vehicle according to some embodiments of this application.
FIG. 2 is a schematic structural diagram of a battery according to some embodiments of this application.
FIG. 3 is a schematic structural diagram of a battery module according to some embodiments of this application.
FIG. 4 is a schematic exploded view of a battery cell according to some embodiments of this application.
FIG. 5 is a schematic structural diagram of an electrode assembly according to some embodiments of this application.
FIG. 6 is a schematic structural diagram of an electrode assembly according to other embodiments of this application.
FIG. 7 is a schematic structural diagram of a first electrode plate of an electrode assembly according to some embodiments of this application.
FIG. 8 is a schematic cross-sectional view of the first electrode plate shown in FIG. 7 along a line A-A.
FIG. 9 is a schematic structural diagram of a second electrode plate of an electrode assembly according to some embodiments of this application.
FIG. 10 is a schematic cross-sectional view of the second electrode plate shown in FIG. 9 along a line B-B.
FIG. 11 is a schematic structural diagram of a second electrode plate of an electrode assembly according to some other embodiments of this application.
FIG. 12 is a schematic structural diagram of a second electrode plate of an electrode assembly according to still other embodiments of this application.
FIG. 13 is a partial schematic diagram of the second electrode plate shown in FIG. 10 enlarged at I.

The accompanying drawings are not necessarily drawn to scale.

Reference signs are described as follows:
X. first direction; Y. thickness direction of electrode assembly; Z. second direction;
1. battery cell;
10. electrode assembly;
11. first electrode plate;
111. first current collector; 1111. first current collecting portion; 1112. first tab portion;
112. first active substance layer;
12. second electrode plate;
121. second current collector; 1211. second current collecting portion; 1212. second tab portion;
122. second active substance layer; 1221. edge region; 1221a. first edge; 1221b. second edge;
1222. center region;
13. separator;
20. housing assembly; 21. housing; 22. end cover assembly;
2. battery module;
3. battery; 3a. box; 31. first box portion; 32. second box portion; and
4. vehicle; 41. controller; and 42. motor.

### DETAILED DESCRIPTION OF EMBODIMENTS

The following specifically discloses in detail embodiments of the electrode assembly, battery cell, battery, and electric apparatus of this application, with appropriate reference to the accompanying drawings. However, unnecessary detailed descriptions may be omitted. For example, detailed descriptions of a well-known matter and repeated descriptions of actually identical structures have been omitted. This is to avoid unnecessarily prolonging the following descriptions, for ease of understanding by persons skilled in the art. In addition, the accompanying drawings and the following descriptions are provided for persons skilled in the art to fully understand this application and are not intended to limit the subject matter recorded in the claims.

It should be noted that, unless otherwise specified, the technical terms or scientific terms used in the embodiments of this application should have a general meaning understood by persons skilled in the art to which the embodiments of this application belong.

In the descriptions of the embodiments of this application, the orientations or positional relationships indicated by the technical terms "center", "vertical", "transverse", "length", "width", "thickness", "upper", "lower", "front", "rear", "left", "right", "perpendicular", "horizontal", "top", "bottom", "inside", "outside", "clockwise", "counterclockwise", "axial", " radial", "circumferential", and the like are based on the orientations or positional relationships shown in the accompanying drawings, are merely intended to facilitate the descriptions of the embodiments of this application and simplify the descriptions, are not intended to indicate or imply that the apparatuses or components mentioned in this application must have specific orientations, or be constructed and operated for a specific orientation, and therefore shall not be construed as a limitation to the embodiments of this application.

In addition, the technical terms "first" and "second" are merely intended for a purpose of description, and shall not be understood as an indication or implication of relative importance or an implicit indication of the number of the indicated technical features. In the description of the embodiments of this application, the meaning of "a plurality of" is more than two, unless otherwise specifically defined.

In the descriptions of the embodiments of this application, unless otherwise specified and defined explicitly, the technical terms "mounted", "interconnected", "connected", and "fastened" are to be interpreted broadly, for example, may be fixedly connected, or detachably connected, or integrated, may be mechanically connected or electrically connected, and may be directly connected or indirectly connected through an intermediate medium, or internally communicated between two elements or interacted between two elements. Persons of ordinary skill in the art can understand specific meanings of these terms in the embodiments of this application as appropriate to specific situations.

In the description of the embodiments of this application, unless explicitly specified and limited otherwise, a first feature being "above" or "below" a second feature may mean direct contact between the first and second features, or indirect contact between the first and second features via an intermediate medium. Further, the first feature being "on", "above", or "on top of" the second feature may mean that the first feature is directly above or obliquely above the second feature, or simply mean that the first feature is horizontally higher than the second feature. The first feature being "under", "below", or "beneath" the second feature may mean that the first feature is directly beneath or obliquely beneath the second feature, or simply mean that the first feature is horizontally lower than the second feature.

"Ranges" disclosed in this application are defined in the form of lower and upper limits. A given range is defined by one lower limit and one upper limit selected, where the selected lower and upper limits define boundaries of that special range. Ranges defined in this method may or may not include end values, and any combinations may be used, meaning any lower limit may be combined with any upper limit to form a range. For example, if ranges of 60 to 120 and 80 to 110 are provided for a specific parameter, it is understood that ranges of 60 to 110 and 80 to 120 can also be envisioned. In addition, if minimum values of a range are given as 1 and 2, and maximum values of the range are given as 3, 4, and 5, the following ranges can all be envisioned: 1 to 3, 1 to 4, 1 to 5, 2 to 3, 2 to 4, and 2 to 5. In this application, unless otherwise stated, a value range of "a to b" is a short representation of any combination of real numbers between a and b, where both a and b are real numbers. For example, a value range of "0 to 5" means that all real numbers in the range of "0 to 5" are listed herein, and "0 to 5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

In this application, the battery cell may include a lithium-ion secondary battery cell, a lithium-ion primary battery cell, a lithium-sulfur battery cell, a sodium-lithium-ion battery cell, a sodium-ion battery cell, a magnesium-ion battery cell, or the like. This is not limited in the embodiments of this application. The battery cell may be cylindrical, flat, cuboid, or of other shapes, which is not limited in the embodiments of this application either. Battery cells are typically divided into three types by packaging method: cylindrical battery cell, prismatic battery cell, and pouch battery cell. The type of battery cells is not limited in the embodiments of this application either.

The battery mentioned in the embodiments of this application means a single physical module that includes one or more battery cells for providing a higher voltage and capacity. For example, the battery mentioned in this application may include a battery module, a battery pack, or the like. A battery typically includes a box assembly configured to enclose one or more battery cells. The box assembly can prevent liquids or other foreign matter from affecting charging or discharging of the battery cell.

The battery cell includes an electrode assembly and an electrolyte. The electrode assembly includes a positive electrode plate, a negative electrode plate, and a separator. The battery cell operates relying on the migration of metal ions between the positive electrode plate and negative electrode plate. The positive electrode plate includes a positive electrode current collector and a positive electrode active substance layer. The positive electrode active substance layer is applied on a surface of the positive electrode current collector. The positive electrode current collector includes a positive electrode current collecting portion and a positive electrode tab portion connected to the positive electrode current collecting portion. The positive electrode current collecting portion is coated with the positive electrode active substance layer, and the positive electrode tab portion is uncoated with the positive electrode active substance layer. With a lithium-ion battery as an example, its positive electrode current collector may be made of aluminum, and its positive electrode active substance layer includes a positive electrode active substance, which may be lithium cobaltate, lithium iron phosphate, ternary lithium, lithium manganate, or the like.

The negative electrode plate includes a negative electrode current collector and a negative electrode active substance layer. The negative electrode active substance layer is applied on a surface of the negative electrode current collector. The negative electrode current collector includes a negative electrode current collecting portion and a negative electrode tab portion connected to the negative electrode current collecting portion. The negative electrode current collecting portion is coated with the negative electrode active substance layer, and the negative electrode tab portion is uncoated with the negative electrode active substance layer. The negative electrode current collector may be made of copper, and the negative electrode active substance layer includes a negative electrode active substance which may be carbon, silicon, or the like. A material of the separator may be PP (polypropylene), PE (polyethylene), or the like.

In the related art, the positive electrode plate and negative electrode plate are designed to be unequal in length and/or width. For example, to mitigate the problem of lithium precipitation on a surface of the negative electrode plate, it is typical to set a length of the negative electrode plate to be greater than that of the positive electrode plate, and/or a width of the negative electrode plate to be greater than that of the positive electrode plate. This design ensures that substantially all metal cations deintercalated from the positive electrode plate can be intercalated into the negative electrode plate, thereby reducing a problem of lithium precipitation on the surface of the negative electrode plate. A battery cell with such a structure may experience a situation where, when subjected to pressure, an edge of the positive electrode plate exerts a locally large force on the negative electrode plate, causing stress concentration. This can potentially lead to shear fracture of the negative electrode plate, thereby reducing usage reliability of the battery cell during use. Certainly, in a battery cell, the positive electrode plate may be designed to have a length greater than that of the negative electrode plate, and/or a width greater than that of the negative electrode plate. A battery cell with such a structure will similarly cause an edge of the negative electrode plate to exert a locally large force on the positive electrode plate, potentially leading to shear fracture of the positive electrode plate and thereby reducing usage reliability of the battery cell during use.

In view of the foregoing problem, embodiments of this application propose an electrode assembly. The electrode assembly includes a first electrode plate and a second electrode plate that have opposite polarities. A size of the first active substance layer in the first electrode plate is larger than that of the second active substance layer in the second electrode plate. A portion of the edge region of the second active substance layer is configured as a variable thickness region. Consequently, when the electrode assembly is applied in a battery cell, the edge region exhibits thickness variations, enabling deformation under an applied force. This increases an overall contact area between the second active substance layer and the first electrode plate, thereby reducing pressure, alleviating stress concentration, effectively mitigating a risk of fracture in the first electrode plate, and enhancing usage reliability of the battery cell during use.

The technical solution described in the embodiments of this application is applicable to batteries containing battery cells and electric apparatuses using the batteries.

The electric apparatus may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, an electric toy airplane, and the like. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric device.

For ease of description, the electric apparatus being a vehicle is used as an example for description of the following embodiments.

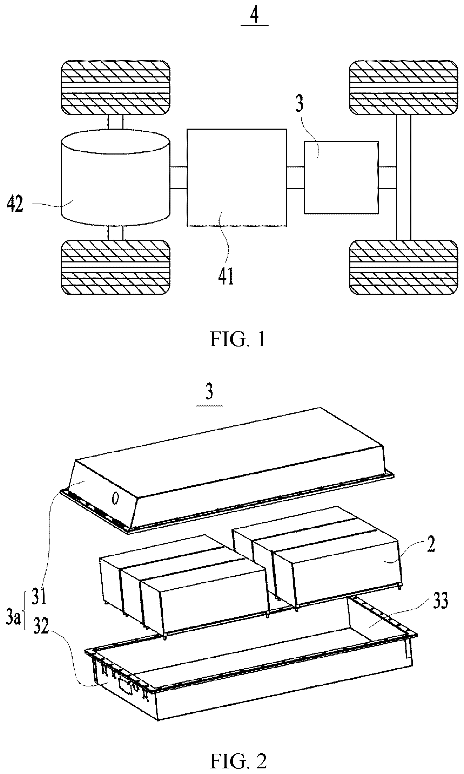

FIG. 1 is a schematic structural diagram of a vehicle according to some embodiments of this application.

As shown in FIG. 1, the vehicle 4 is provided with a battery 3 inside, and the battery 3 may be disposed at the bottom, front, or back of the vehicle 4. The battery 3 may be configured to supply power for the vehicle 4. For example, the battery 3 may be used as an operational power source for the vehicle 4.

The vehicle 4 may further include a controller 41 and a motor 42. The controller 41 is configured to control the battery 3 to supply power to the motor 42. For example, the battery 3 is configured for a working electricity demand during start, navigation, and driving of the vehicle 4.

In some embodiments of this application, the battery 3 may be used not only as the operational power source for the vehicle 4 but also as a driving power source for the vehicle 4, completely or partially replacing fossil fuel or natural gas to provide driving power for the vehicle 4.

FIG. 2 is a schematic exploded view of a battery according to some embodiments of this application.

As shown in FIG. 2, the battery 3 includes a box 3a and a battery cell (not shown in FIG. 2). The battery cell is accommodated in the box 3a.

The box 3a is configured to accommodate the battery cell. The box 3a may be a variety of structures. In some embodiments, the box 3a may include a first box portion 31 and a second box portion 32. The first box portion 31 and the second box portion 32 are configured to cover and fit with each other. The first box portion 31 and the second box portion 32 jointly define a box space 33 to accommodate the battery cell. The second box portion 32 may be a hollow structure with an opening at one end. The first box portion 31 is a plate-like structure. The first box portion 31 covers an opening side of the second box portion 32 to form the box 3a with the box space 33. Alternatively, both the first box portion 31 and the second box portion 32 may be hollow structures with an opening at one end. An opening side of the first box portion 31 covers an opening side of the second box portion 32 to form the box 3a with the box space 33. Certainly, the first box portion 31 and the second box portion 32 may have various shapes, such as a cylinder, a cuboid, and the like.

To improve sealing performance after the first box portion 31 and the second box portion 32 are connected, a sealing piece may also be disposed between the first box portion 31 and the second box portion 32, such as sealant, a sealing ring, and the like.

Assuming that the first box portion 31 covers a top of the second box portion 32, the first box portion 31 may also be referred to as an upper box cover, and the second box portion 32 may also be referred to as a lower box body.

In the battery 3, one or a plurality of battery cells may be provided. If a plurality of battery cells are provided, the plurality of battery cells may be connected in series, parallel, or series-parallel, where being connected in series-parallel means a combination of series and parallel connections of the plurality of battery cells. The plurality of battery cells may be directly connected in series, parallel, or series-parallel, and an entirety constituted by the plurality of battery cells is accommodated in the box 3a. Certainly, the plurality of battery cells may first be connected in series, parallel, or series-parallel to constitute a battery module 2, and then a plurality of battery modules 2 are connected in series, parallel, or series-parallel to constitute an entirety, and accommodated in the box 3a.

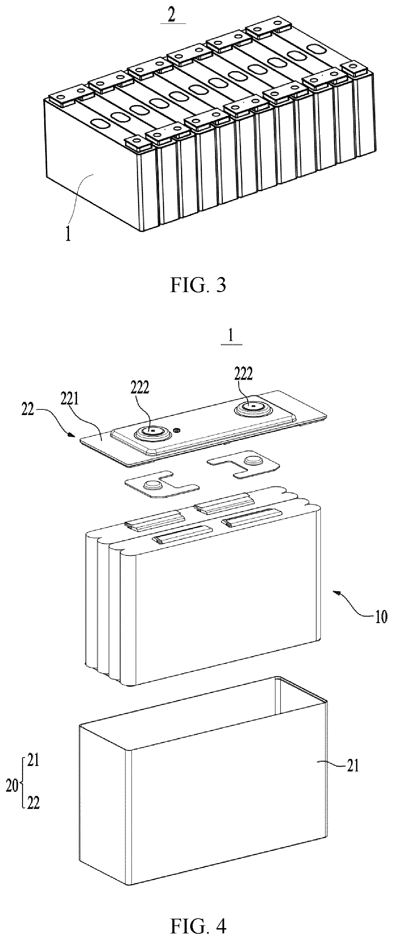

FIG. 3 is a schematic structural diagram of the battery module shown in FIG. 2. As shown in FIG. 3, in some embodiments, a plurality of battery cells 1 are provided. The plurality of battery cells 1 first are connected in series, parallel, or series-parallel to form the battery module 2. The plurality of battery modules 2 are then connected in series, parallel, or series-parallel to form an entirety, which is accommodated in the box.

The plurality of battery cells 1 in the battery module 2 may be electrically connected by using a busbar component to implement connection in series, parallel, or series-parallel between the plurality of battery cells 1 in the battery module 2.

FIG. 4 is a schematic exploded view of a battery cell according to some embodiments of this application.

As shown in FIG. 4, the battery cell 1 according to the embodiment of this application includes an electrode assembly 10 and a housing assembly 20. The electrode assembly 10 is accommodated in the housing assembly 20.

In some embodiments, the housing assembly 20 may also be configured to accommodate an electrolyte, such as an electrolyte solution. The housing assembly 20 may be a variety of structures.

In some embodiments, the housing assembly 20 may include a housing 21 and an end cover assembly 22. The housing 21 is a hollow structure with an opening on one side. The end cover assembly 22 covers the opening of the housing 21 to implement a sealed connection, thereby forming an accommodating cavity 210 to accommodate the electrode assembly 10 and the electrolyte.

The housing 21 may be a variety of shapes, such as a cylinder, a cuboid, and the like. The shape of the housing 21 may be determined based on a specific shape of the electrode assembly 10. For example, if the electrode assembly 10 is a cylindrical structure, a cylindrical housing may be selected. If the electrode assembly 10 is a cuboid structure, a cuboid housing may be selected.

In some embodiments, the end cover assembly 22 includes an end cover 221, and the end cover 221 covers the opening of the housing 21. The end cover 221 may be a variety of structures. For example, the end cover 221 is a plate-like structure, a hollow structure with an opening at one end, and the like. For example, in FIG. 4, the housing 21 is a cuboid structure, the end cover 221 is a plate-like structure, and the end cover 221 covers an opening at a top of the housing 21.

In some embodiments, the end cover assembly 22 may further include an electrode terminal 222, and the electrode terminal 222 is mounted on the end cover 221. Two electrode terminals 222 are provided. The two electrode terminals 222 are respectively defined as a positive electrode terminal and a negative electrode terminal. Both the positive electrode terminal and the negative electrode terminal are configured to be electrically connected to the electrode assembly 10 to output electric energy generated by the electrode assembly 10.

In some other embodiments, the housing assembly 20 may also have other structures. For example, the housing assembly 20 includes a housing 21 and two end cover assemblies 22. The housing 21 is a hollow structure with an opening on two opposite sides. One end cover assembly 22 correspondingly covers one opening of the housing 21 to implement a sealed connection, thereby forming an accommodating cavity 210 to accommodate the electrode assembly 10 and the electrolyte. In this structure, two electrode terminals 222 may be disposed on one end cover assembly 22 while no electrode terminal 222 is disposed on the other end cover assembly 22. Alternatively, one electrode terminal 222 may be disposed on each of the two end cover assemblies 22.

In the battery cell 1, one or a plurality of the electrode assemblies 10 accommodated in the housing assembly 20 may be provided. For example, in FIG. 4, four electrode assemblies 10 are provided.

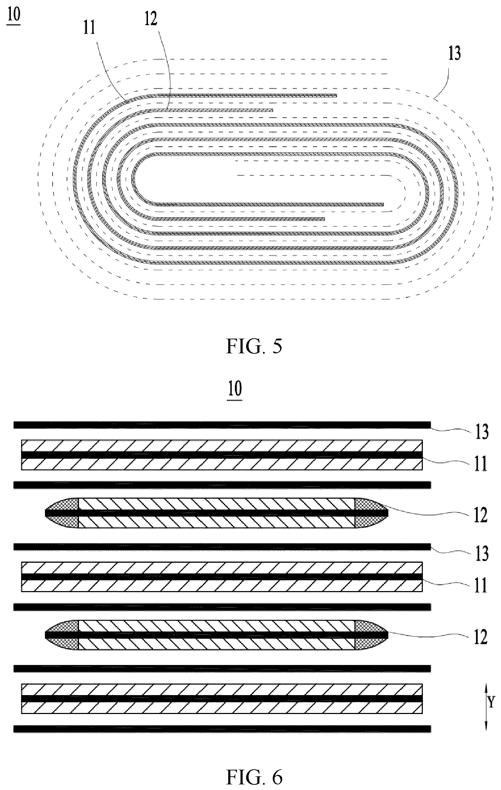

As shown in FIG. 5 to FIG. 10, in some embodiments, the electrode assembly 10 includes a first electrode plate 11 and a second electrode plate 12. The first electrode plate 11 includes a first current collector 111 and a first active substance layer 112. The first active substance layer 112 is disposed on at least one surface of a first current collecting portion 1111. The second electrode plate 12 has a polarity opposite to that of the first electrode plate 11. The second electrode plate 12 includes a second current collector 121 and a second active substance layer 122. The second active substance layer 122 is disposed on at least one surface of the second current collector 121. Along a thickness direction Y of the electrode assembly 10, a projection of the second active substance layer 122 is located within a projection of the first active substance layer 112. The second active substance layer 122 includes an edge region 1221 and a center region 1222. The edge region 1221 and the center region 1222 are both disposed on a surface of the second current collector 121. The edge region 1221 and the center region 1222 are continuously disposed, and the edge region 1221 is disposed on at least one side of the center region 1222. Along a direction from the edge region 1221 toward the center region 1222, a thickness of the edge region 1221 increases stepwise, and an average thickness of the edge region 1221 is less than an average thickness of the center region 1222. In the embodiment of this application, when the electrode assembly 10 is a laminated electrode assembly, the thickness direction Y of the electrode assembly 10 is parallel to a thickness direction of the first electrode plate 11, and the thickness direction Y of the electrode assembly 10 is parallel to a thickness direction of the second electrode plate 12. When the electrode assembly 10 is a wound electrode assembly, the wound electrode assembly is a flat structure, and a thickness direction of the flat structure is the thickness direction of the electrode assembly 10.

The first electrode plate 11 may be a positive electrode plate, and correspondingly, the second electrode plate 12 may be a negative electrode plate. Alternatively, the first electrode plate 11 may be a negative electrode plate, and correspondingly, the second electrode plate 12 may be a positive electrode plate. In the following description, an example in which the first electrode plate 11 is a negative electrode plate and the second electrode plate 12 is a positive electrode plate will be used for description.

The first electrode plate 11 includes a first current collector 111, and the first current collector 111 is a negative electrode current collector. Optionally, the first current collector 111 includes a first current collecting portion 1111 and a first tab portion 1112 that are continuously disposed along a first direction X. The first current collecting portion 1111 is a negative electrode current collecting portion, and the first tab portion 1112 is a negative electrode tab portion. The first current collecting portion 1111 and the first tab portion 1112 are electrically connected. The first active substance layer 112 is a negative electrode active substance layer and may include a negative electrode active substance. The first active substance layer 112 may be disposed on one surface of the first current collecting portion 1111, or disposed on two surfaces of the first current collecting portion 1111 opposite each other.

The second electrode plate 12 includes a second current collector 121, and the second current collector 121 is a positive electrode current collector. Optionally, the second current collector 121 includes a second current collecting portion 1211 and a second tab portion 1212 that are continuously disposed along the first direction X. The second current collecting portion 1211 is a positive electrode current collecting portion, and the second tab portion 1212 is a positive electrode tab portion. The second current collecting portion 1211 and the second tab portion 1212 are electrically connected. The second active substance layer 122 is a positive electrode active substance layer and may include a positive electrode active substance. The second active substance layer 122 is disposed on one surface of the second current collecting portion 1211, or disposed on two surfaces of the second current collecting portion 1211 opposite each other.

Optionally, the first current collecting portion 1111 and the second current collecting portion 1211 are disposed opposite each other, their areas may differ. Corresponding to the disposition of the active substance layer, along the thickness direction Y of the electrode assembly, a projection of the second current collecting portion 1211 is located within a projection of the first current collecting portion 1111.

Optionally, the first tab portion 1112 and the second tab portion 1212 may be disposed opposite each other. In this case, tab portions of the positive electrode plate and the negative electrode plate are located in the same direction. For example, the positive electrode tab portion is located at a top of the battery cell, and the negative electrode tab portion is located at the top of the battery cell.

Alternatively, the first tab portion 1112 and the second tab portion are disposed in a staggered manner. In this case, the tab portions of the positive electrode plate and the negative electrode plate are at two positions in the same direction. For example, the positive electrode tab portion is located at the top of the battery cell, and the negative electrode tab portion is located at a bottom of the battery cell.

The electrode assembly 10 may be a variety of structures such as a wound electrode assembly or a laminated electrode assembly. Optionally, the electrode assembly 10 may further include a separator 13. In a case that the electrode assembly 10 is a wound electrode assembly, the positive electrode plate, the negative electrode plate, and the separator 13 are all strip-shaped structures. In the embodiment of this application, the positive electrode plate, the separator 13, and the negative electrode plate may be stacked in sequence and wound for more than two turns to form the electrode assembly 10. In a case that the electrode assembly 10 is a laminated electrode assembly, the electrode assembly 10 may include a plurality of positive electrode plates and a plurality of negative electrode plates. The positive electrode plates and the negative electrode plates are alternately stacked. A stacking direction is parallel to a thickness direction of the positive electrode plate and a thickness direction of the negative electrode plate. FIG. 5 shows a schematic structural diagram of a wound electrode assembly. FIG. 6 shows a schematic structural diagram of a laminated electrode assembly.

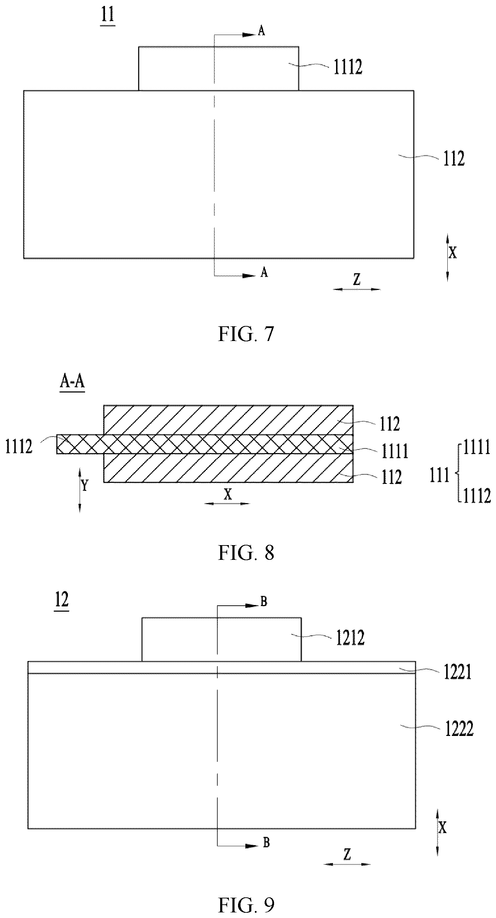

As shown in FIG. 6 and FIG. 7, in the embodiment of this application, the first direction X is parallel to a distribution direction of the first current collecting portion 1111 and the first tab portion 1112. The thickness direction Y of the electrode assembly 10 is perpendicular to the first direction X, and projections of the first active substance layer 112 and the second active substance layer 122 have an overlapping portion, meaning that the first active substance layer 112 and the second active substance layer 122 are disposed opposite each other along the thickness direction Y of the electrode assembly 10. The thickness direction Y of the electrode assembly 10 is parallel to a thickness direction of the first electrode plate 11, or in other words, the thickness direction Y of the electrode assembly 10 is parallel to a thickness direction of the second electrode plate 12.

Along the thickness direction Y of the electrode assembly 10, a projection of the second active substance layer 122 is located within a projection of the first active substance layer 112. In other words, an overall area of the second active substance layer 122 is smaller than an overall area of the first active substance layer 112. For example, a length of the second active substance layer 122 is less than a length of the first active substance layer 112. In this case, a width of the second active substance layer 122 may be equal to or less than a width of the first active substance layer 112. Alternatively, for another example, a width of the second active substance layer 122 is less than a width of the first active substance layer 112. In this case, a length of the second active substance layer 122 may be equal to or less than a length of the first active substance layer 112. In this structural form, an edge of the first active substance layer 112 may possibly extend beyond an edge of the second active substance layer 122. When the battery cell is subjected to a force, the second active substance layer 122 and the corresponding second current collecting portion 1211 act as an entirety. An edge of a structure of this entirety may exert a force on the first active substance layer 112, easily causing a stress concentration problem.

In the embodiment of this application, the second active substance layer 122 is configured with a thickness differentiation. The second active substance layer 122 includes an edge region 1221 and a center region 1222 that are continuously disposed. As the name implies, the edge region 1221 is an edge portion of the second active substance layer 122, and the center region 1222 is a center portion of the second active substance layer 122. An average thickness of the edge region 1221 is less than an average thickness of the center region 1222. The average thickness is understood as a thickness measured at a finite number of positions in a region, taking an average thereof. In a direction from the edge region 1221 toward the center region 1222, a thickness of the edge region 1221 exhibits a changing trend, characterized by a stepwise increase. The stepwise increase may be an increase with a constant slope, that is, a linear increase, or an increase with a variable slope. In this case, the thickness may increase continuously, or may also increase in a gradient manner. Therefore, when the electrode assembly 10 is applied to a battery cell, a thickness difference in the edge region 1221 enables deformation under a force, a contact area between the second active substance layer 122 and the entire first electrode plate 11 increases, pressure can be reduced, and stress concentration can be alleviated, thereby effectively mitigating a risk caused by the first electrode plate 11 cracking and breaking, and improving usage reliability of the battery cell.

In the embodiment of this application, specific disposition positions of the edge region 1221 have a plurality of types, which are described in detail below.

The first current collecting portion 1111 is provided with the first active substance layer 112, and the first tab portion 1112 is not provided with the first active substance layer 112. When the first electrode plate 11 is subjected to a force, a connection portion between the first current collecting portion 1111 and the first tab portion 1112 has a risk of breaking.

Refer to FIG. 6 to FIG. 10, in some embodiments, the edge region 1221 is disposed at least on a side of the center region 1222 close to the first tab portion 1112, and an area on which a connection portion of the first current collecting portion 1111 and the first tab portion 1112 comes into contact with the edge region 1221 increases. Consequently, pressure can be further reduced, and stress concentration can be alleviated, thereby effectively mitigating a risk of the first electrode plate 11 breaking, and improving the usage reliability of the battery cell.

In a case that the first tab portion 1112 and the second tab portion 1212 are disposed opposite each other, the edge region 1221 is disposed at least on a side of the center region 1222 close to the first tab portion 1112. In a structure of the second electrode plate 12, the edge region 1221 is disposed at least on a side of the center region 1222 close to the second tab portion 1212.

In a case that the first tab portion 1112 and the second tab portion 1212 are disposed in a staggered manner, the edge region 1221 is disposed at least on a side of the center region 1222 close to the first tab portion 1112. In a structure of the second electrode plate 12, the edge region 1221 is disposed at least on a side of the center region 1222 facing away from the second tab portion 1212.

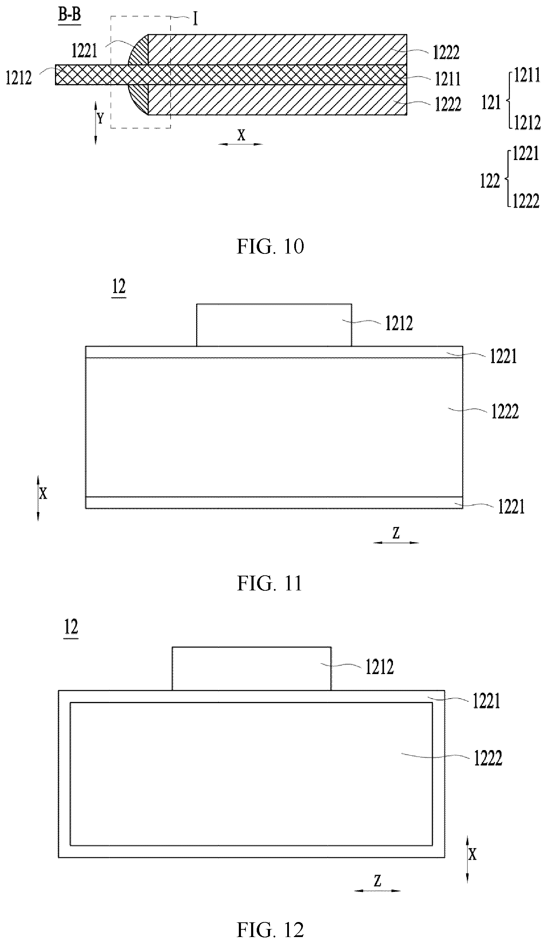

As shown in FIG. 11, optionally, the center region 1222 includes two sides opposite each other along a first direction X. One side is a side close to the first tab portion 1112, and the other side is a side facing away from the first tab portion 1112. The edge region 1221 is disposed on a side of the center region 1222 close to the first tab portion 1112, and is also disposed on a side of the center region 1222 facing away from the first tab portion 1112. In this structural form, a risk of breaking at a connection portion between the first tab portion 1112 and the first current collecting portion 1111 can be alleviated, and a risk of breaking at an end of the first current collecting portion 1111 facing away from the first tab portion 1112 can also be alleviated, thereby further improving the usage reliability of the battery cell.

As shown in FIG. 12, in some embodiments, the center region 1222 further includes two sides opposite each other along a second direction Z, and the edge region 1221 is further disposed on at least one side of the center region 1222 along the second direction Z, thereby further improving the usage reliability of the battery cell. The second direction Z, the first direction X, and the thickness direction Y of the electrode assembly 10 are pairwise perpendicular.

Optionally, the edge region 1221 may be disposed on two sides of the center region 1222 opposite each other along the second direction Z, thereby further improving the usage reliability of the battery cell.

For example, the first direction X is parallel to a width direction of the second electrode plate 12, and the second direction Z is parallel to a length direction of the second electrode plate 12. The edge region 1221 may be disposed on at least one side of the center region 1222 in the width direction (for example, a side close to the first tab portion 1112). Optionally, the edge region 1221 may be disposed on two sides of the center region 1222 in the width direction. Further optionally, the edge region 1221 may also be disposed on at least one side of the center region 1222 in the length direction, and even further optionally, the edge region 1221 may also be disposed on two sides of the center region 1222 in the length direction.

Alternatively, the edge region 1221 may be disposed on at least one side of the center region 1222 in the length direction (for example, a side close to the first tab portion 1112). Optionally, the edge region 1221 may be disposed on two sides of the center region 1222 in the length direction. Further optionally, the edge region 1221 may also be disposed on at least one side of the center region 1222 in the width direction, and even further optionally, the edge region 1221 may also be disposed on two sides of the center region 1222 in the width direction.

Because an average thickness difference exists between the center region 1222 and the edge region 1221, to further alleviate stress concentration, in some embodiments, the edge region 1221 and the center region 1222 are smoothly and transitionally connected. A connection portion between the edge region 1221 and the center region 1222 substantially has no protrusions or depressions, so that when a force is applied to the first electrode plate 11 at the connection portion between the edge region 1221 and the center region 1222, stress on the first electrode plate 11 is relatively uniform, effectively alleviating a stress concentration problem, thereby improving the usage reliability of the battery cell. In the embodiment of this application, a smooth and transitional connection may be understood as a connection portion between the edge region 1221 and the center region 1222 being differentiable, meaning that the connection portion between the edge region 1221 and the center region 1222 substantially has no abrupt points, that is, non-differentiable points. Alternatively, the edge region 1221 and the center region 1222 may be connected in a curved manner.

Thickness variation trends of the edge region 1221 in the embodiment of this application have a plurality of types, which are described in detail below.

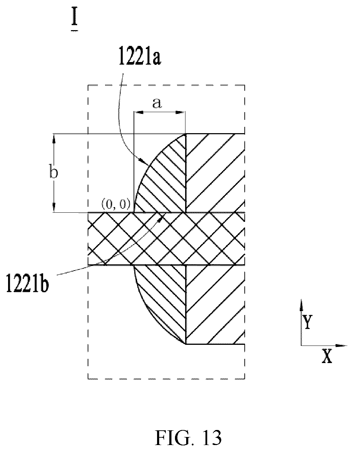

As shown in FIG. 13, in some embodiments, a cross-sectional area of the edge region 1221 parallel to the thickness direction Y of the electrode assembly includes a first edge 1221a and a second edge 1221b. The first edge 1221a and the second edge 1221b are opposite each other along the thickness direction Y of the electrode assembly, and the first edge 1221a is located on a side of the second edge 1221b facing away from the second current collecting portion 1211. The first edge 1221a is a smooth line segment. In FIG. 13, "a" denotes a dimension of the second edge 1221b in a direction from the edge region 1221 toward the center region 1222, and "b" denotes a thickness of the edge region 1221 at a position close to the center region 1222.

The first edge 1221a is a smooth line segment, and an overall thickness increase trend of the edge region 1221 is moderated. When the edge region 1221 comes into contact with the first electrode plate 11, a contact area between the edge region 1221 and the first electrode plate 11 can be increased to reduce a stress concentration phenomenon on the first electrode plate 11, thereby improving the usage reliability of the battery cell.

In some embodiments, at least a portion of the smooth line segment is a curved line segment. This structure, when being in contact with the first electrode plate 11, can deform and increase a contact area between the edge region 1221 and the first electrode plate 11 to reduce a stress concentration phenomenon on the first electrode plate 11, thereby improving the usage reliability of the battery cell.

In some examples, a portion of the smooth line segment facing away from the center region 1222 may be a straight line segment, and a portion connected to the center region 1222 may be a curved line segment, thereby implementing a smooth and transitional connection between the edge region 1221 and the center region 1222.

In some other examples, the smooth line segment may be a curved line segment, and a thickness increase trend thereof is moderated. When the edge region 1221 comes into contact with the first electrode plate 11, the edge region 1221 can deform and increase a contact area between the edge region 1221 and the first electrode plate 11 to reduce a stress concentration phenomenon on the first electrode plate 11, thereby improving the usage reliability of the battery cell.

In some embodiments, an average slope of the first edge 1221a is K, and K ≤ 1/20. For example, K may be 1/20, 1/25, 1/30, 1/40, 1/50, or a range between any two of the preceding numeral values.

Using an example in which the edge region 1221 is disposed on a side of the center region 1222 close to the first tab portion 1112, and one surface of the second current collecting portion 1211 is provided with the second active substance layer 122, the first edge 1221a may be regarded as an X-Y Cartesian coordinate system, which is constructed with an endpoint of the first edge 1221a facing away from the central region 1222 being the origin (0,0), a direction from the edge region 1221 towards the central region 1222 being the positive direction of the X-axis (abscissa), and a direction from the second current collecting portion 1211 towards the second active substance layer 122 being the positive direction of the Y-axis (ordinate). An average slope K of the first edge 1221a is an average of slopes at a plurality of points (for example, 10 points) or a plurality of X-coordinate intervals of the first edge 1221a in this coordinate system. For example, an X-coordinate value of the first edge 1221a is x1, and a corresponding Y-coordinate value is y1. The X-coordinate value is x2, and a corresponding Y-coordinate value is y2. A slope of the first edge 1221a between (x1 to x2) is (y2-y1)/(x2-x1). Correspondingly, a slope of the first edge 1221a at a coordinate point (x1,y1) can be obtained by taking a derivative at this coordinate point.

When the average slope K of the first edge 1221a is within the above range, a thickness variation is relatively moderate, helping alleviating a stress concentration phenomenon on the first electrode plate 11, thereby improving the usage reliability of the battery cell.

It should be noted that when the first edge 1221a is a straight line segment, the slope of the first edge 1221a is a constant value. When the first edge 1221a is a curved line segment, the slope of the first edge 1221a is a variable value. For example, a change in the slope satisfies a linear equation.

Optionally, along the direction from the edge region 1221 toward the center region 1222, the slope of the first edge 1221a decreases stepwise. The thickness increase trend of the edge region 1221 is faster when being farther from the center region 1222. The thickness increase trend of the edge region 1221 is more moderate when being closer to the center region 1222. Therefore, it facilitates deformation of the edge region 1221 under a force to increase a contact area with the first electrode plate 11, and facilitates formation of a smooth and transitional connection between the edge region 1221 and the center region 1222.

In some embodiments, along the direction from the edge region 1221 toward the center region 1222, a dimension of the edge region is A, measured in mm, and a thickness of the second electrode plate is B, measured in mm, where 20 ≤ A/B ≤ 200. For example, A/B may be 20, 30, 50, 60, 80, 100, 120, 150, 180, 190, 200, or a range between any two of the preceding numeral values.

In some embodiments, the first electrode plate 11 is a negative electrode plate, and the first active substance layer 112 includes a negative electrode active substance. The negative electrode active substance may be a negative electrode active substance that is used for battery cells and is well known in the art. For example, the negative electrode active substance may include, but is not limited to, at least one of an alkali metal, natural graphite, artificial graphite, soft carbon, hard carbon, a silicon-based material, a tin-based material, and lithium titanate. The silicon-based material may include at least one of elemental silicon, silicon oxide, a silicon-carbon composite, a silicon-nitrogen composite, and a silicon alloy material. The tin-based material may include at least one of elemental tin, tin oxide, and a tin alloy material. Optionally, the negative electrode active substance includes an alkali metal. The alkali metal includes one or more of lithium metal, sodium metal, and potassium metal. Further optionally, the negative electrode active substance includes lithium metal. Because the lithium metal is relatively soft and prone to damage and breaking, when the first electrode plate 11 is used in cooperation with the second electrode plate 12, a risk of damaging lithium metal can be reduced, thereby improving the usage reliability of the battery cell.

In some embodiments, the first electrode plate 11 is a negative electrode plate, and the first current collector 111 is a negative electrode current collector. The negative electrode current collector may be a metal foil or a composite current collector. As an example of a metal foil, a copper foil may be used. The composite current collector may include a polymer material base layer and a metal material layer formed on at least one surface of the polymer material base layer. For example, the metal material may include at least one of copper, a copper alloy, nickel, a nickel alloy, titanium, a titanium alloy, silver, and a silver alloy. For example, the polymer material base layer may include at least one of polypropylene (PP), polyethylene terephthalate (PET), polybutylene terephthalate (PBT), polystyrene (PS), and polyethylene (PE).

The negative electrode active substance layer is typically formed by applying a negative electrode slurry on the negative electrode current collector followed by drying and cold pressing, or by pressing an alkali metal onto the negative electrode current collector. The negative electrode slurry is typically formed by dispersing the negative electrode active material, an optional conductive agent, an optional binder, and other optional additives into a solvent and stirring uniformly. The solvent may be, but is not limited to, N-methylpyrrolidone (NMP) or deionized water.

The negative electrode plate does not exclude additional functional layers other than the negative electrode active substance layer. For example, in some embodiments, the negative electrode plate in this application further includes a conductive primer layer (for example, including a conductive agent and a binder) that is sandwiched between the negative electrode current collector and the negative electrode active substance layer and that is disposed on the surface of the negative electrode current collector. In other embodiments, the negative electrode plate in this application further includes a protective layer covering a surface of the negative electrode active substance layer.

In some embodiments, the second electrode plate 12 is a positive electrode plate, and the second active substance layer 122 includes a positive electrode active substance. When the battery cell in this application is a lithium-ion battery, the positive electrode active substance may include, but is not limited to, at least one of a lithium-containing transition metal oxide, a lithium-containing phosphate, and their respective modified compounds. Examples of the lithium-containing transition metal oxide may include, but are not limited to, at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and their respective modified compounds. Examples of the lithium-containing phosphate may include, but are not limited to, at least one of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and their respective modified compounds.

In some embodiments, to further improve an energy density of the battery cell, the positive electrode active substance for a lithium-ion battery may include at least one of a lithium transition metal oxide represented by a general formula LiₐNi_{b}Co_{c}M_{d}OₑA_{f} and its modified compounds. In the above formula, 0.8 ≤ a ≤ 1.2, 0.5 ≤ b < 1, 0 < c < 1, 0 < d < 1, 1 ≤ e ≤ 2, 0 ≤ f ≤ 1, M includes at least one of Mn, Al, Zr, Zn, Cu, Cr, Mg, Fe, V, Ti, and B, and A includes at least one of N, F, S, and Cl.

For example, the positive electrode active substance for a lithium-ion battery may include at least one of LiCoO₂, LiNiO₂, LiMnO₂, LiMn₂O₄, LiNi_{1/3}Co_{1/3}Mn_{1/3}O₂ (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.80}Co_{0.15}Al_{0.05}O₂, LiFePO₄, and LiMnPO₄.

When the battery cell in this application is a sodium-ion battery, the positive electrode active substance may include, but is not limited to, at least one of a sodium transition metal oxide, a polyanionic material (for example, a phosphate, a fluorophosphate, a pyrophosphate, and a sulfate), and a Prussian blue material.

For example, the positive electrode active substance for a sodium-ion battery may include at least one of NaFeO₂, NaCoO₂, NaCrO₂, NaMnO₂, NaNiO₂, NaNi_{1/2}Ti_{1/2}O₂, NaNi_{1/2}Mn_{1/2}O₂, Na_{2/3}Fe_{1/3}Mn_{2/3}O₂, NaNi_{1/3}Co_{1/3}Mn_{1/3}O₂, NaFePO₄, NaMnPO₄, NaCoPO₄, a Prussian blue material, and a material represented by a general formula XₚM'_{q}(PO₄)ᵣOₓY₃₋ₓ. In the general formula XₚM'_{q}(PO₄)ᵣOₓY₃₋ₓ, 0 < p ≤ 4, 0 < q ≤ 2, 1 ≤ r ≤ 3, 0 ≤ x ≤ 2, X includes at least one of H⁺, Li⁺, Na⁺, K⁺, and NH₄⁺, M' is a transition metal cation, optionally including at least one of V, Ti, Mn, Fe, Co, Ni, Cu, and Zn, and Y is a halogen anion, optionally including at least one of F, Cl, and Br.

In this application, the modified compounds of the above positive electrode active substances may be the positive electrode active materials being modified through by doping and/or surface coating.

In some embodiments, the second electrode plate 12 is a positive electrode plate, and the first current collector 111 is a positive electrode current collector. The positive electrode current collector may be a metal foil or a composite current collector. As an example of a metal foil, an aluminum foil may be used. The composite current collector may include a polymer material base layer and a metal material layer formed on at least one surface of the polymer material base layer. For example, the metal material may include at least one of aluminum, an aluminum alloy, nickel, a nickel alloy, titanium, a titanium alloy, silver, and a silver alloy. For example, the polymer material base layer may include at least one of polypropylene (PP), polyethylene terephthalate (PET), polybutylene terephthalate (PBT), polystyrene (PS), and polyethylene (PE).

The positive electrode active substance layer is typically formed by applying a positive electrode slurry onto the positive electrode current collector, followed by drying and cold pressing. The positive electrode slurry is typically formed by dispersing the positive electrode active material, an optional conductive agent, an optional binder, and any other components in a solvent and stirring uniformly. The solvent may be, but is not limited to, N-methylpyrrolidone (NMP).

In some embodiments, the battery cell further includes a separator 13. The separator 13 is disposed between the first electrode plate 11 and the second electrode plate 12 to isolate the first electrode plate 11 and the second electrode plate 12. This application imposes no particular limitation on a type of the separator 13, any well-known porous structure separator 13 with good chemical stability and mechanical stability may be selected.

In some embodiments, a material of the separator 13 may be selected from at least one of glass fiber, non-woven fabric, polyethylene, polypropylene, and polyvinylidene fluoride. The separator 13 may be a single-layer film or a multi-layer composite film, with no particular limitation. When the separator 13 is a multi-layer composite film, a material of each layer may be the same or different, with no particular limitation.

In some embodiments, the positive electrode plate, the separator 13, and the negative electrode plate may be formed into the electrode assembly 10 through a winding process and/or a lamination process.

### Examples

The following examples describe in more detail content disclosed in this application. These examples are intended only for illustrative purposes because various modifications and changes made without departing from the scope of the content disclosed in this application are apparent to persons skilled in the art. Unless otherwise stated, all parts, percentages, and ratios reported in the following examples are based on mass, all reagents used in the examples are commercially available or synthesized in a conventional manner, and can be used directly without further treatment, and all instruments used in the examples are commercially available.

### Example 1 Preparation of lithium-ion battery

### Preparation of positive electrode plate

An aluminum foil with a thickness of 12 µm was used as a positive electrode current collector.

A positive electrode active substance LiNi_{1/3}Co_{1/3}Mn_{1/3}O₂ (NCM333), a conductive agent carbon black (Super P), and a binder polyvinylidene fluoride (PVDF) were mixed uniformly in an appropriate amount of solvent N-methylpyrrolidone (NMP) at a mass ratio of 96.2:2.7:1.1 to obtain a positive electrode slurry. The positive electrode slurry was applied onto the positive electrode current collector aluminum foil, followed by processes such as drying, cold pressing, slitting, and cutting, to obtain the positive electrode plate.

### Preparation of negative electrode plate

A copper foil with a thickness of 8 µm was used as a negative electrode current collector.

A lithium metal was rolled onto the current collector copper foil. Peripheral edges of the lithium metal were subjected to secondary rolling, and then edge trimming, cutting, and slitting were performed to prepare the negative electrode plate. A length of the negative electrode plate was less than a length of the positive electrode plate, and a width of the negative electrode plate was less than a width of the positive electrode plate.

### Preparation of electrolyte

In an environment with a water content less than 10 ppm, non-aqueous organic solvents ethylene carbonate EC and diethyl carbonate DMC were mixed at a volume ratio of 1:1 to obtain an electrolyte solvent, and then lithium salt LiPF₆ was mixed with the mixed solvent to prepare an electrolyte with a lithium salt concentration of 1 mol/L.

### Preparation of lithium-ion battery

The positive electrode plate, a separator, and the negative electrode plate were stacked in sequence to obtain an electrode assembly. The electrode assembly was placed into an outer packaging and dried, and then injected with the electrolyte. After processes such as vacuum encapsulation, standing, formation, and shaping were performed, the lithium-ion battery was obtained.

### Example 2

A lithium-ion battery was prepared using a method similar to that in Example 1. A difference from Example 1 was that the negative electrode plate in Example 2 was prepared using the following steps:

A copper foil with a thickness of 8 µm was used as a negative electrode current collector.

A lithium metal was rolled onto the current collector copper foil. An edge of the lithium metal close to a negative electrode tab portion was subjected to secondary rolling, and then edge trimming, cutting, and slitting were performed to prepare the negative electrode plate. A length of the negative electrode plate was less than a length of the positive electrode plate, and a width of the negative electrode plate was less than a width of the positive electrode plate.

### Example 3

A lithium-ion battery was prepared using a method similar to that in Example 1. A difference from Example 1 was that the negative electrode plate in Example 3 was prepared using the following steps:
A copper foil with a thickness of 8 µm was used as a negative electrode current collector.

A lithium metal was rolled onto the current collector copper foil. An edge of the lithium metal close to a negative electrode tab portion and an edge of the lithium metal facing away from the negative electrode tab portion were subjected to secondary rolling, and then edge trimming, cutting, and slitting were performed to prepare the negative electrode plate. A length of the negative electrode plate was less than a length of the positive electrode plate, and a width of the negative electrode plate was less than a width of the positive electrode plate.

### Comparative Example 1

A lithium-ion battery was prepared using a method similar to that in Example 1. A difference from Example 1 was that the negative electrode plate in Comparative Example 1 was prepared using the following steps:
A copper foil with a thickness of 8 µm was used as a negative electrode current collector.

A lithium metal was rolled onto the current collector copper foil, and then edge trimming, cutting, and slitting were performed to prepare the negative electrode plate. A length of the negative electrode plate was less than a length of the positive electrode plate, and a width of the negative electrode plate was less than a width of the positive electrode plate.

### Example 4 Preparation of lithium-ion battery

### Preparation of positive electrode plate

An aluminum foil with a thickness of 12 µm was used as a positive electrode current collector.

A positive electrode active material LiNi_{1/3}Co_{1/3}Mn_{1/3}O₂ (NCM333), a conductive agent carbon black (Super P), and a binder polyvinylidene fluoride (PVDF) were mixed uniformly in an appropriate amount of a solvent N-methylpyrrolidone (NMP) at a mass ratio of 96.2:2.7:1.1 to obtain a positive electrode slurry. The positive electrode slurry was applied onto the positive electrode current collector aluminum foil, followed by processes such as drying, cold pressing, slitting, and cutting, to obtain the positive electrode plate. Peripheral edges of the positive electrode slurry were subjected to laser ablation to make a thickness of the peripheral edges less than a thickness of a center region.

### Preparation of negative electrode plate

A copper foil with a thickness of 8 µm was used as a negative electrode current collector.

A lithium metal was rolled onto the current collector copper foil, and then edge trimming, cutting, and slitting were performed to prepare the negative electrode plate. A length of the negative electrode plate was greater than a length of the positive electrode plate, and a width of the negative electrode plate was greater than a width of the positive electrode plate.

### Preparation of electrolyte

In an environment with a water content less than 10 ppm, non-aqueous organic solvents ethylene carbonate EC and diethyl carbonate DMC were mixed at a volume ratio of 1:1 to obtain an electrolyte solvent, and then lithium salt LiPF₆ was mixed with the mixed solvent to prepare an electrolyte with a lithium salt concentration of 1 mol/L.

### Preparation of lithium-ion battery

The positive electrode plate, a separator, and the negative electrode plate were stacked in sequence and wound to obtain an electrode assembly. The electrode assembly was placed into an outer packaging and dried, and then injected with the electrolyte. After processes such as vacuum encapsulation, standing, formation, and shaping were performed, the lithium-ion battery was obtained.

### Example 5 Preparation of lithium-ion battery

A lithium-ion battery was prepared using a method similar to that in Example 4. A difference from Example 4 was that the positive electrode plate in Example 5 was prepared using the following steps:
An aluminum foil with a thickness of 12 µm was used as a positive electrode current collector.

A positive electrode active material LiNi_{1/3}Co_{1/3}Mn_{1/3}O₂ (NCM333), a conductive agent carbon black (Super P), and a binder polyvinylidene fluoride (PVDF) were mixed uniformly in an appropriate amount of a solvent N-methylpyrrolidone (NMP) at a mass ratio of 96.2:2.7:1.1 to obtain a positive electrode slurry. The positive electrode slurry was applied onto the positive electrode current collector aluminum foil, followed by processes such as drying, cold pressing, slitting, and cutting, to obtain the positive electrode plate. An edge of the positive electrode slurry close to a positive electrode tab portion was subjected to laser ablation to make a coating thickness less than a thickness of a center region of the positive electrode slurry.

### Example 6 Preparation of lithium-ion battery

A lithium-ion battery was prepared using a method similar to that in Example 4. A difference from Example 4 was that the positive electrode plate in Example 6 was prepared using the following steps:
An aluminum foil with a thickness of 12 µm was used as a positive electrode current collector.

A positive electrode active material LiNi_{1/3}Co_{1/3}Mn_{1/3}O₂ (NCM333), a conductive agent carbon black (Super P), and a binder polyvinylidene fluoride (PVDF) were mixed uniformly in an appropriate amount of a solvent N-methylpyrrolidone (NMP) at a mass ratio of 96.2:2.7:1.1 to obtain a positive electrode slurry. The positive electrode slurry was applied onto the positive electrode current collector aluminum foil, followed by processes such as drying, cold pressing, slitting, and cutting, to obtain the positive electrode plate. A coating thickness of an edge of the positive electrode slurry close to a positive electrode tab portion was less than that of a center region of the positive electrode slurry, and an edge of the positive electrode slurry facing away from the positive electrode tab portion was subjected to laser ablation to make a coating thickness less than a thickness of the center region of the positive electrode slurry.

### Comparative Example 2 Preparation of lithium-ion battery

A lithium-ion battery was prepared using a method similar to that in Example 4. A difference from Example 4 was that the positive electrode plate in Comparative Example 2 was prepared using the following steps:
An aluminum foil with a thickness of 12 µm was used as a positive electrode current collector.

A positive electrode active material LiNi_{1/3}Co_{1/3}Mn_{1/3}O₂ (NCM333), a conductive agent carbon black (Super P), and a binder polyvinylidene fluoride (PVDF) were mixed uniformly in an appropriate amount of a solvent N-methylpyrrolidone (NMP) at a mass ratio of 96.2:2.7:1.1 to obtain a positive electrode slurry. The positive electrode slurry was applied onto the positive electrode current collector aluminum foil, followed by processes such as drying, cold pressing, slitting, and cutting, to obtain the positive electrode plate.

### Test Part:

### 1. The usage reliability test of lithium-ion battery

The lithium-ion battery prepared above was subjected to cycle testing under a clamping force of 0.2 MPa to 2 MPa, with specific steps as follows:
The lithium-ion battery was charged at a constant current of 0.5C to a voltage U1, charged at a constant voltage U1 to 0.05C, and left to stand for 10 minutes, and then was discharged at a constant current of 0.5C to a voltage U2, and left to stand for 10 minutes.

After the above steps were repeated for 50 cycles, the battery cell was disassembled. After the positive electrode plate was separated, observation was made to check whether breaking occurred at an edge of the electrode plate with a relatively larger area.

Judgment criteria:
Pass: No breaking occurred in any electrode plate in the lithium-ion battery, and no powder detachment occurred at the edges;
Fail: At least one segment of an electrode plate in the lithium-ion battery exhibited breaking (or had cracks); and/or powder detachment occurred at an edge of the electrode plate.

### Test results:

The test results are shown in Table 1.

**Table 1**

| Item | Positive electrode plate | Negative electrode plate | Ratio of length of positive electrode plate to length of negative electrode plate | Ratio of width of positive electrode plate to width of negative electrode plate | Battery cell performance |
|---|---|---|---|---|---|
| | Position subjected to thinning treatment | Position subjected to thinning treatment | | | |
| Comparative Example 1 | None | None | > 1 | > 1 | Fail: Powder detachment occurred at edge of positive electrode plate |
| Example 1 | None | Peripheral edges of lithium metal were thinned | > 1 | > 1 | Pass |
| Example 2 | None | Edge of lithium metal close to negative electrode tab portion was thinned | > 1 | > 1 | Pass |
| Example 3 | None | Edge of lithium metal close to negative electrode tab portion and edge of lithium metal facing away from negative electrode tab portion were thinned | > 1 | > 1 | Pass |
| Comparative Example 2 | None | None | < 1 | < 1 | Fail: negative electrode plate had cracks |
| Example 4 | Coating thickness of peripheral edges of positive electrode slurry was less than that of center region of positive electrode slurry | None | < 1 | < 1 | Pass |
| Example 5 | Coating thickness of edge of positive electrode slurry close to positive electrode tab portion was less than that of center region of positive electrode slurry | None | < 1 | < 1 | Pass |
| Example 6 | Coating thickness of edge of positive electrode slurry close to positive electrode tab portion was less than that of center region of positive electrode slurry, and coating thickness of edge of positive electrode slurry facing away from positive electrode tab portion was less than that of center region of positive electrode slurry | None | < 1 | < 1 | Pass |

As shown in Table 1, in Comparative Example 1, an edge of the negative electrode plate may exert a locally large force on the positive electrode plate, causing stress concentration. This can potentially lead to shear fracture or powder detachment at the edge of the positive electrode plate, thereby reducing the usage reliability of the battery cell. In Examples 1 to 3, different thicknesses of the negative electrode plate were provided. The thicknesses in the edge region were different. Therefore, deformation can occur under a force, and a contact area between the negative electrode plate and the entire positive electrode plate is increased, the pressure can be reduced and stress concentration is alleviated, thereby effectively mitigating a risk of the positive electrode plate breaking, and improving the usage reliability of the battery cell.

In Comparative Example 2, an edge of the positive electrode plate may exert a locally large force on the negative electrode plate, causing stress concentration. This can potentially lead to shear fracture of the negative electrode plate, thereby reducing the usage reliability of the battery cell. In Examples 4 to 6, different thicknesses of the positive electrode plate were provided, and the thicknesses in the edge regions were different. Therefore, deformation can occur under a force, and a contact area between the positive electrode plate and the negative electrode plate is increased, the pressure can be reduced and stress concentration is alleviated, thereby effectively mitigating a risk of the negative electrode plate breaking, and improving the usage reliability of the battery cell.

Although illustrative embodiments have been demonstrated and described, persons skilled in the art should understand that the foregoing embodiments shall not be construed as limiting this application, and that the embodiments may be changed, replaced, and modified without departing from the spirit, principle, and scope of this application.

## Claims

1. An electrode assembly, comprising:
a first electrode plate comprising a first current collector and a first active substance layer, and the first active substance layer being disposed on at least one surface of the first current collector; and
a second electrode plate having a polarity opposite to that of the first electrode plate, the second electrode plate comprising a second current collector and a second active substance layer, and the second active substance layer being disposed on at least one surface of the second current collector;
wherein along a thickness direction of the electrode assembly, a projection of the second active substance layer is located within a projection of the first active substance layer; and
the second active substance layer comprises an edge region and a center region, the edge region and the center region both being disposed on the surface of the second current collector, the edge region and the center region being continuously disposed, and the edge region being located on at least one side of the center region, wherein along a direction from the edge region toward the center region, a thickness of the edge region increases stepwise, and an average thickness of the edge region is less than an average thickness of the center region.

2. The electrode assembly according to claim 1, wherein
the first current collector comprises a first current collecting portion and a first tab portion continuously disposed along a first direction, the first active substance layer being disposed on at least one surface of the first current collecting portion, and the first direction being perpendicular to the thickness direction of the electrode assembly; and
the second current collector comprises a second current collecting portion and a second tab portion continuously disposed along the first direction, the second active substance layer being disposed on at least one surface of the second current collecting portion;
wherein the first current collecting portion and the second current collecting portion are disposed opposite each other; and
the edge region is disposed at least on a side of the center region close to the first tab portion.

3. The electrode assembly according to claim 2, wherein
the edge region is disposed on two sides of the center region opposite each other along the first direction.

4. The electrode assembly according to any one of claims 1 to 3, wherein
the edge region is further disposed on at least one side of the center region along a second direction, the second direction being perpendicular to the thickness direction of the electrode assembly.

5. The electrode assembly according to claim 4, wherein
the edge region is disposed on two sides of the center region opposite each other along the second direction.

6. The electrode assembly according to any one of claims 1 to 5, wherein
the edge region and the center region are smoothly and transitionally connected.

7. The electrode assembly according to any one of claims 1 to 6, wherein
a cross-sectional area of the edge region parallel to the thickness direction of the electrode assembly comprises a first edge and a second edge, the first edge and the second edge being opposite each other along the thickness direction of the electrode assembly, the first edge being located on a side of the second edge facing away from the second current collector, and the first edge being a smooth line segment.

8. The electrode assembly according to claim 7, wherein at least a portion of the smooth line segment is a curved line segment.

9. The electrode assembly according to claim 7 or 8, wherein the smooth line segment is a curved line segment.

10. The electrode assembly according to any one of claims 7 to 9, wherein an average slope of the first edge is K and K ≤ 1/20.

11. The electrode assembly according to any one of claims 7 to 10, wherein
along the direction from the edge region toward the center region, a slope K of the first edge decreases stepwise.

12. The electrode assembly according to any one of claims 1 to 11, wherein
along the direction from the edge region toward the center region, a dimension of the edge region is A, measured in mm; and
a thickness of the second electrode plate is B, measured in mm;
wherein 20 ≤ A/B ≤ 200.

13. The electrode assembly according to any one of claims 1 to 12, wherein
the first electrode plate is a negative electrode plate and the first active substance layer comprises an alkali metal.

14. A battery cell, comprising the electrode assembly according to any one of claims 1 to 13.

15. A battery, comprising the battery cell according to claim 14.

16. An electric apparatus, comprising the battery according to claim 15.
